# EUROPEAN PATENT APPLICATION

(11) **EP 4 152 820 A1**
(43) Date of publication of application: **22.03.2023**
(21) Application number: 21804986.4
(22) Date of filing: 08.05.2021
(51) Int. Cl.: H04W 36/00, H04W 36/08

(54) **SWITCHING METHOD AND APPARATUS, STORAGE MEDIUM, AND TERMINAL**

(30) Priority: 14.05.2020 CN 202010408127
(71) Applicant: Spreadtrum Communications (Shanghai) Co., Ltd., Shanghai 201203 (CN)
(72) Inventor: XU, Min, Shanghai 201203 (CN)
(74) Representative: Nordmeyer, Philipp Werner
(86) International application number: PCT/CN2021/092248
(87) International publication number: WO 2021/227968

(57) **Abstract**

A switching method and apparatus, a storage medium, and a terminal, the method comprising: during a switching or switching preparation period, receiving replacement indication information; the replacement indication information is used to indicate that a target base station or target cell corresponding to a relay UE is replaced, or is used to indicate the termination of remote UE switching. The solution of the present invention can effectively prevent base station switching failure caused by the movement of a relay LTE before switching is completed, which is beneficial to improving the success rate of switching and increasing communication efficiency.

## Description

### CROSS-REFERENCE TO RELATED APPLICATIONS

This application claims priority to Chinese Patent Application No. 202010408127.2, filed on May 14, 2020, and entitled "HANDOVER METHOD AND APPARATUS, STORAGE MEDIUM, AND TERMINAL", the entire disclosure of which is incorporated herein by reference.

### TECHNICAL FIELD

The present disclosure generally relates to communication technology field, and more particularly, to a handover method and apparatus, a storage medium and a terminal.

### BACKGROUND

Vehicle to X (V2X, also known as vehicle to everything) is a key technology for future intelligent transportation systems, and mainly provides vehicle data transmission solutions based on the 3rd Generation Partnership Project (3GPP) communication standards. V2X communication includes Vehicle-to-Vehicle (V2V) communication, Vehicle-to-Infrastructure (V2I) communication, and Vehicle-to-Pedestrian (V2P) communication. V2X applications will improve driving security, reduce congestion and vehicle energy consumption, increase traffic efficiency and in-vehicle entertainment information. V2X communication can also be applied to other user terminal communication methods, such as Proximity-based services (ProSe), and is not limited to vehicle communication related fields.

In V2X communication, V2V communication is a communication method different from ordinary wireless cellular network communication. In a traditional cellular network, User Equipment (UE) and base station equipment communicate, and one LTE and another LTE communicate through a base station and a core network. However, in V2V communication, one UE communicates directly with another UE, and a link between the UEs becomes a sidelink (SL), where a corresponding interface is the PC5 interface. However, an interface between the LTE and the base station equipment is the Uu interface. SL discovery is mainly a procedure performed by a ProSe UE before transmitting data using SL, and is used to find a remote UE and deliver necessary information to set up the SL. The UE performs this procedure based on policies and resources configured by a network.

The UE and the base station generally communicate through the Uu interface, but the UE is mobile. When the UE (hereinafter referred to as remote UE) moves to a certain position and cannot be directly connected to the base station, or the UE is a wearable mobile device, the UE may be connected to the base station through another UE which is called a relay UE or a relay terminal. The two UEs directly transmit data through the PC5 interface, and the relay UE is connected to the base station through the Uu interface to achieve connection between the remote UE and the base station. When the remote UE is in a connected state, if it gradually moves out of a coverage area of a source base station, the source base station needs to initiate a handover procedure according to a measurement report of the remote UE. If a target base station needs to connect through the relay LTE, a cross-base station Uu to PC5 handover procedure occurs for the remote UE.

However, if the relay UE moves or hands over to detach from an original cell during handover preparation or handover of the remote UE, the handover will fail.

### SUMMARY

Embodiments of the present disclosure may avoid a handover failure caused by movement of a relay UE before handover is completed.

In an embodiment of the present disclosure, a handover method is provided, including: receiving replacement indication information during handover or handover preparation, wherein the replacement indication information indicates replacement of a target base station or a target cell corresponding to a relay UE, or indicates termination of handover for a remote UE.

Optionally, the method further includes: generating and transmitting handover termination information based on the replacement indication information, wherein the handover termination information indicates to terminate a handover operation between a source base station or a source cell and an original target base station or an original target cell, the original target base station is the target base station corresponding to the relay UE before the replacement, and the original target cell is a target cell in the original target base station.

Optionally, the method further includes: transmitting request information which indicates an updated target base station or an updated target cell based on the replacement indication information, wherein the updated target base station is selected from a group consisting of the target base station after the replacement or target base stations corresponding to other relay LTEs, and the updated target cell is selected from a group consisting of the target cell after the replacement or target cells corresponding to other relay UEs, wherein the target base station after the replacement is the target base station corresponding to the relay UE after the replacement, and the target cell after the replacement is a target cell in the target base station after the replacement.

Optionally, said transmitting request information which indicates an updated target base station or an updated target cell based on the replacement indication information includes: evaluating cell information included in the replacement indication information to obtain an evaluation result, and selecting an optimal target base station or an optimal target cell as the updated target base station or the updated target cell based on the evaluation result, wherein the cell information includes cell information of target cells in the target base station after the replacement and cell information of target cells in the target base stations corresponding to other relay UEs; and transmitting the request information which indicates the updated target base station or the updated target cell.

Optionally, a communication connection with a source base station is a Uu connection, and a communication connection with the relay LTE is a PC5 connection.

Optionally, a PC5 connection with the relay UE is retained unreleased until the handover is completed.

Optionally, the replacement indication information includes at least one of the following: handover indication information which indicates that the relay UE performs cell reselection or handover; an identity of the target base station after the replacement or an identity of the target cell in the target base station after the replacement, wherein the target base station after the replacement is the target base station corresponding to the relay LTE after the replacement; indication information indicating that signal quality of the target cell in the target base station before the replacement is below a preset threshold; indication information of discovering a new target cell; or indication information indicating that signal quality of the new target cell is higher than the preset threshold.

In an embodiment of the present disclosure, a handover method is provided, including: generating replacement indication information based on cell reselection or handover being performed, wherein the replacement indication information indicates replacement of a target base station or a target cell, or indicates termination of handover for a remote LTE; and transmitting the replacement indication information.

In an embodiment of the present disclosure, a handover apparatus is provided, including: a receiving circuitry configured to receive replacement indication information during handover or handover preparation, wherein the replacement indication information indicates replacement of a target base station or a target cell corresponding to a relay UE, or indicates termination of handover for a remote UE.

In an embodiment of the present disclosure, a handover apparatus is provided, including: a generating circuitry configured to generate replacement indication information based on cell reselection or handover being performed, wherein the replacement indication information indicates replacement of a target base station or a target cell, or indicates termination of handover for a remote UE; and a transmitting circuitry configured to transmit the replacement indication information.

In an embodiment of the present disclosure, a storage medium having computer instructions stored therein is provided, wherein when the computer instructions are executed by a processor, any one of the above methods is performed.

In an embodiment of the present disclosure, a terminal including a memory and a processor is provided, wherein the memory has computer instructions stored therein, and when the processor executes the computer instructions, any one of the above methods is performed.

Embodiments of the present disclosure may provide following advantages.

To a remote UE side, embodiments of the present disclosure provide a handover method, including: receiving replacement indication information during handover or handover preparation, wherein the replacement indication information indicates replacement of a target base station or a target cell corresponding to a relay UE, or indicates termination of handover for a remote UE.

Therefore, a base station handover failure caused by movement of a relay LTE before handover is completed may be avoided, which is conducive to improving a handover success rate and communication efficiency. Specifically, during the remote UE performs handover preparation or handover, the remote UE can learn in time that the relay LTE has moved or has been handed over based on replacement indication information, and then timely inform the source base station to stop handover operations with the original target base station indicated by a current handover procedure, thereby avoiding futile execution of the handover procedure in a case that the handover is definitely failed, which prevents a waste of power consumption and signaling overhead.

To a relay UE side, embodiments of the present disclosure further provide a handover method, including: generating replacement indication information based on cell reselection or handover being performed, wherein the replacement indication information indicates replacement of a target base station or a target cell, or indicates termination of handover for a remote LTE; and transmitting the replacement indication information.

Therefore, during the remote UE performs handover preparation or handover, the relay LTE actively generates the replacement indication information based on its own movement or handover situation and transmits the replacement indication information to the remote UE, thereby avoiding a handover failure caused by the remote UE being unaware of the movement of the relay UE. Further, the remote UE, based on the replacement indication information, promptly notifies the source base station to stop the handover with the original target base station that has become no longer suitable due to the movement of the relay UE, making it possible to avoid a handover failure.

### BRIEF DESCRIPTION OF THE DRAWINGS

FIG 1 is a flow chart of a handover method according to an embodiment;
FIG 2 is a structural diagram of a handover apparatus according to an embodiment;
FIG 3 is a flow chart of a handover method according to an embodiment;
FIG 4 is a structural diagram of a handover apparatus according to an embodiment;
FIG 5 is a diagram of signaling interaction in an application scenario according to an embodiment; and
FIG 6 is a diagram of signaling interaction in an application scenario according to an embodiment.

### DETAILED DESCRIPTION

According to the background, if a relay UE moves or hands over to leave an original cell during handover preparation or handover of a remote UE and when the remote UE needs to be connected to a target base station by the relay UE, the handover will fail.

Specifically, in 3GPP New Radio (NR), LTE radio has three states: Radio Resource Control (RRC) Idle state (RRC_IDLE), RRC inactive state (RRC_INACTIVE), and RRC connected state (RRC_CONNECTED). A UE in an idle state is not connected to a base station, and only needs to initiate position update, perform cell selection reselection procedures, and receive paging regularly. A UE in the connected state is connected to a network, and the network configures Resource Blocks (RBs) and physical layer configuration for the UE, including Dual-Connectivity (DC) operations (including intra-frequency or inter-frequency scenarios, at least two cells being controlled by different base stations (gNBs)) and Carrier Aggregation (CA) operations (controlled by a same base station). The network may schedule uplink and downlink data for UE. A UE in the inactive state does not need to notify a base station when moving within a certain RNA range, and retains certain configuration (including configuration such as Packet Data Convergence Protocol (PDCP), Service Data Adaptation Protocol (SDAP) and some low-layer configuration). If the network needs to schedule the LTE or the LTE has data to transmit, the UE needs to change to the connected state and resume the retained configuration for data transmission.

Existing handover procedures mainly adopt two solutions as follows.

Solution 1: a remote UE first discovers a relay UE and sets up a PC5 connection, and then notifies a source base station to initiate a handover request to a target base station. The relay UE may be in a non-connected state (such as an idle state), at which time the target base station needs to page the remote UE, initiate a connection, and configure relevant bearer and channel/cell group configuration, including bearer configuration set up to deliver data sent by the remote UE.

Solution 2: NR standard Release 16 (referred to as R16) introduced Conditional Handover (CHO), mainly to prevent a source base station from being unable to issue a handover command to a LTE in time due to too drastic change of LTE signals. Therefore, one or more available cells and their related configuration may be pre-configured based on UE measurement reporting (reporting in advance, current channel quality and other conditions may not meet a handover requirement), and a handover condition is configured as well. When the handover condition is met, the UE directly hands over to one of the available cells (initiates a random access procedure in the target cell and transmits an RRC reconfiguration completion message), and then notifies the source base station to release the UE' connection.

By introducing CHO into a Uu-PC5 handover procedure, the UE may set up PC5 connections with multiple relay UEs. To avoid a waste of resources, the relay LTE in the non-connected state will not initiate operations of setting up a connection with available target cells to complete configuration. The remote UE may evaluate whether these relay UEs meet the handover condition, and when a relay UE meets the configured handover condition, the remote UE initiates a handover procedure and triggers the relay UE to set up a connection with its base station (that is, the target base station of this handover). Based on solution 2, it takes a certain evaluation time from receiving the handover condition to the actual handover procedure.

For Solution 1, when the relay UE is in the non-connected state, after setting up PC5 with the relay UE, the remote UE needs to wait for the relay UE to set up a connection with the target base station to complete the configuration. In this case, if the relay UE moves or hands over, the source base station cannot be notified in time, resulting in a handover failure.

For a conditional handover solution supporting Solution 2, as there is a certain evaluation time between receiving the handover condition and the actual handover procedure, if the relay LTE moves during this period, the source base station cannot be notified in time, resulting in a handover failure.

It can be seen that based on the existing techniques, if the relay UE moves or hands over to detach from the original cell during the remote LTE performs handover preparation or handover, the handover may fail.

Embodiments of the present disclosure provide a handover method, including: receiving replacement indication information during handover or handover preparation, wherein the replacement indication information indicates replacement of a target base station or a target cell corresponding to a relay UE, or indicates termination of handover for a remote UE.

Therefore, a base station handover failure caused by movement of a relay LTE before handover is completed may be avoided, which is conducive to improving a handover success rate and communication efficiency. Specifically, during the remote UE performs handover preparation or handover, the remote UE can learn in time that the relay UE has moved or has been handed over based on replacement indication information, and then timely inform the source base station to stop handover operations with the original target base station indicated by a current handover procedure, thereby avoiding futile execution of the handover procedure in a case that the handover is definitely failed, which prevents a waste of power consumption and signaling overhead.

In order to clarify the objects, characteristics and advantages of the disclosure, embodiments of present disclosure will be described in detail in conjunction with accompanying drawings.

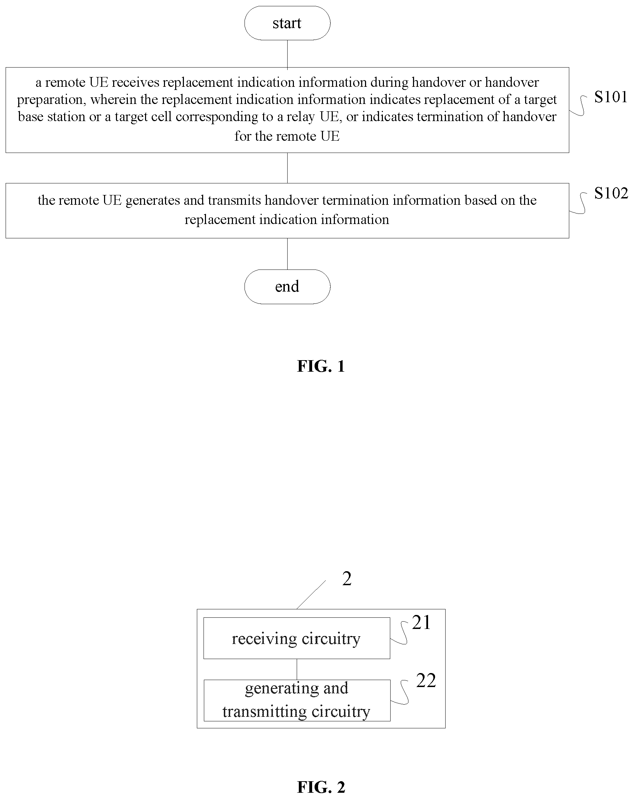

FIG 1 is a flow chart of a handover method according to an embodiment. The handover method may be applied to an application scenario of a remote UE handing over a base station, and in this application scenario, a target base station needs to be connected through a relay UE. Specifically, in this scenario, the remote UE undergoes a cross-base station Uu-to-PC5 handover procedure.

The method may be performed by a LTE side, such as by the remote LTE on the UE side. The remote UE refers to a UE that sets up a connection with a base station for data communication. The remote UE and the base station communicate through a Uu interface, that is, a communication connection between the remote UE and the base station is a Uu connection.

In some embodiments, the remote UE needs to communicate with a target base station through the relay UE, and the remote UE and the relay UE directly transmit data through the PC5 interface, that is, a communication connection between the remote LTE and the relay UE is a PC5 connection.

In some embodiments, a base station connected to the remote UE before the handover is called a source base station, and a base station connected to the remote UE after the handover is called a target base station. Specifically, the remote UE initially communicates with the source base station, and then moves out of a signal coverage of the source base station due to factors such as movement of the remote UE, in which case a handover procedure needs to be performed. If the target base station is far away from the remote UE or other factors occur, the connection between the remote UE and the target base station needs to be achieved through the relay UE.

The relay UE in a non-connected state can perform cell measurement, cell re-selection, etc. If it is found based on measurement that signal quality of a service cell currently residing becomes lower and another cell with higher signal quality is found, the relay UE triggers a cell reselection procedure. The relay UE in a connected state can also perform measurement and notify the original base station of a measurement result, and the original base station may initiate a handover procedure to a more suitable target cell according to the measurement result. The embodiments are aimed to a situation that the target base station changes because the relay UE moves or hands over before completion of the handover procedure of the remote UE. The target base station before replacement is called the original target base station. By the embodiments, the remote LTE can timely notify the source base station to stop a handover procedure with the original target base station, and start a handover procedure with the target base station after the replacement as soon as possible.

In some embodiments, the handover method provided by following steps S101 and S102 may be performed by a chip with a handover function in the UE or by a baseband chip in the UE.

Specifically, referring to FIG 1, the handover method in the embodiment may include S101 and S102.

In S101, a remote LTE receives replacement indication information during handover or handover preparation, wherein the replacement indication information indicates replacement of a target base station or a target cell corresponding to a relay UE, or indicates termination of handover for the remote UE.

In some embodiments, the replacement indication information may indicate to the remote UE that the relay UE has a handover failure, or a Radio Link Failure (RLF), or an RRC reestablishment.

In S102, the remote LTE generates and transmits handover termination information based on the replacement indication information, wherein the handover termination information indicates to terminate a handover operation between a source base station or a source cell and an original target base station or an original target cell, the original target base station is the target base station corresponding to the relay UE before the replacement, and the original target cell is a target cell in the original target base station.

In some embodiments, a period of the handover or the handover preparation refers to a period from a time point when the source base station determines to initiate a handover or configures a conditional handover to a time point when the remote UE completes performing the handover procedure.

Further, the replacement indication information may be generated by the relay LTE and sent to the remote LTE. For example, before the handover procedure of the remote UE is completed, if the relay UE moves or hands over to cause a replacement of the target base station, the relay UE generates and transmits the replacement indication information through the PC5 interface.

In some embodiments, the replacement indication information includes at least one of the following: handover indication information which indicates that the relay UE performs cell reselection or handover; an identity of the target base station after the replacement or an identity of the target cell in the target base station after the replacement, wherein the target base station after the replacement is the target base station corresponding to the relay LTE after the replacement; indication information indicating that signal quality of the target cell in the target base station before the replacement is below a preset threshold; indication information of discovering a new target cell, wherein the new target cell may belong to the target base station after the replacement or before the replacement; indication information indicating that signal quality of the new target cell is higher than the preset threshold; or signal quality or load condition of the new target cell.

In some embodiments, the base station may include a plurality of cells. By indicating the identity of the target cell, the source base station can determine the target base station after the replacement to which the target cell belongs.

Further, the base station stores information of the remote UE and the relay LTE in communication with it.

Further, the signal quality of the new target cell may be utilized by the remote LTE to select a suitable relay LTE to perform the handover operation.

In some embodiments, in S102, through the handover termination information, the remote UE may notify the source base station to trigger handover termination between base stations, or notify the source base station about the replacement indication information of the relay LTE, and the source base station determines whether to trigger the handover termination procedure between base stations.

In some embodiments, after S102, the method further includes: transmitting request information which indicates an updated target base station or an updated target cell based on the replacement indication information, wherein the updated target base station is selected from a group consisting of the target base station after the replacement or target base stations corresponding to other relay UEs, and the updated target cell is selected from a group consisting of the target cell after the replacement or target cells corresponding to other relay UEs, wherein the target base station after the replacement is the target base station corresponding to the relay UE after the replacement, and the target cell after the replacement is a target cell in the target base station after the replacement. The source base station determines whether to initiate to the new target base station a handover request for the new target cell based on handover information of the updated target base station or cell.

Specifically, the replacement indication information may include cell information of the target cell in the target base station after the replacement.

Further, the remote UE may evaluate cell information included in the replacement indication information to obtain an evaluation result, and select an optimal target base station or an optimal target cell as the updated target base station or the updated target cell based on the evaluation result, wherein the cell information includes cell information of target cells in the target base station after the replacement and cell information of target cells in the target base stations corresponding to other relay UEs. Further, the remote UE may transmit the request information which indicates the updated target base station or the updated target cell.

For example, the remote UE may obtain, in advance, a plurality of available relay LTEs, and signal quality and load conditions of the target cells of the plurality of available relay UEs. If signal quality and a load condition of the target cell in the target base station after the replacement contained in the replacement indication information are optimal among all the available UEs pre-grasped by the remote UE, the remote LTE selects the target base station indicated in the replacement indication information as the updated target base station.

If the signal quality and the load condition of the target cell in the target base station after the replacement contained in the replacement indication information are not optimal among all the available UEs pre-grasped by the remote UE, the remote UE selects the optimal target base station or cell from the plurality of available relay UEs as the updated target base station or cell.

Further, the handover request may be sent by the remote UE to the source base station, and the source base station and the updated target base station set up a connection.

In some embodiments, the remote UE may retain a PC5 connection with the relay UE unreleased until the handover operation is completed, regardless of whether the target base station after the replacement of the relay UE is the updated target base station.

From above, a handover failure caused by movement of a relay UE before handover is completed may be avoided, which is conducive to improving a handover success rate and communication efficiency. Specifically, during the remote UE performs handover preparation or handover, the remote UE can learn in time that the relay LTE has moved or has been handed over based on replacement indication information, and then timely inform the source base station to stop handover operations with the original target base station indicated by a current handover procedure, thereby avoiding futile execution of the handover procedure in a case that the handover is definitely failed, which prevents a waste of power consumption and signaling overhead.

FIG 2 is a structural diagram of a handover apparatus according to an embodiment. Those skilled in the art could understand that the handover apparatus 2 may be applied to perform the method as shown in FIG 1.

Referring to FIG 2, the handover apparatus 2 may include: a receiving circuitry 21 configured to receive replacement indication information during handover or handover preparation, wherein the replacement indication information indicates replacement of a target base station or a target cell corresponding to a relay LTE, or indicates termination of handover for a remote UE.

Further, the handover apparatus 2 may further include a generating and transmitting circuitry 22 configured to generate and transmit handover termination information based on the replacement indication information, wherein the handover termination information indicates to terminate a handover operation between a source base station or a source cell and an original target base station or an original target cell, the original target base station is the target base station corresponding to the relay UE before the replacement, and the original target cell is a target cell in the original target base station.

Details of working principles and working modes of the handover apparatus 2 may be referred to relevant description of FIG 1, and are not repeated here.

In some embodiments, the handover apparatus 2 may correspond to a chip with a handover function in a LTE, or to a chip with a data processing function, such as a System-On-Chip (SOC) or a baseband chip, or to a chip module including a chip with a handover function in the UE, or to a chip module including a chip with a data processing function, or to the UE.

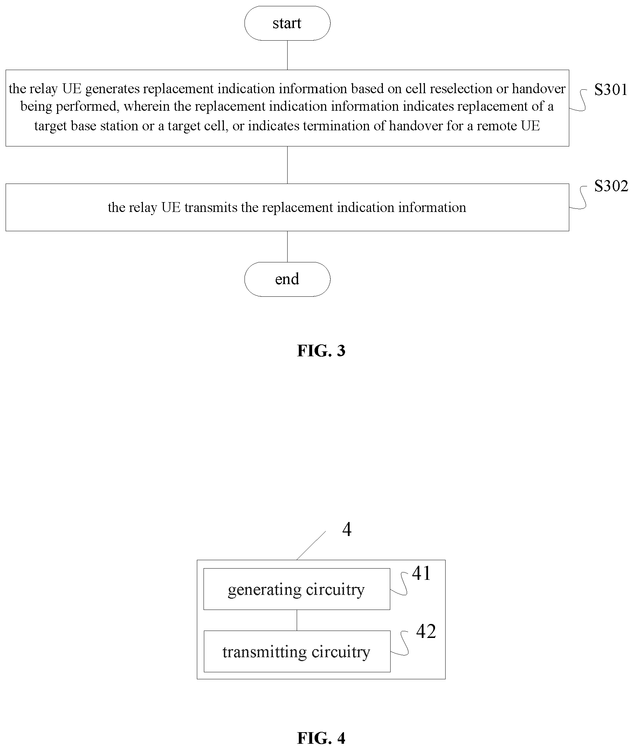

FIG 3 is a flow chart of a handover method according to an embodiment. The handover method may be applied to an application scenario of a remote UE handing over a base station, and in this application scenario, a target base station needs to be connected through a relay LTE. Specifically, in this application scenario, the remote UE undergoes a cross-base station Uu-to-PC5 handover procedure.

The handover method may be performed by a UE side, such as by the relay UE on the UE side.

In some embodiments, the handover method provided by following steps S301 and S302 may be performed by a chip with a handover function in the UE or by a baseband chip in the UE.

Specifically, referring to FIG 3, the handover method may include S301 and S302.

In S301, the relay UE generates replacement indication information based on cell reselection or handover being performed, wherein the replacement indication information indicates replacement of a target base station or a target cell, or indicates termination of handover for a remote UE.

In S302, the relay UE transmits the replacement indication information.

More specifically, the action of transmitting the replacement indication information is performed during the remote UE in the handover or handover preparation, and the remote UE receives the replacement indication information.

Those skilled in the art could understand that S301 and S302 may be regarded as steps corresponding to S101 and S 102 of the above method as shown in FIG 1, and the two are complementary in specific implementation principles and logic. Therefore, explanation of terms in the present embodiment may be referred to relevant description of the embodiment as shown in FIG 1, and is not repeated here.

For example, before the handover procedure of the remote UE is completed, if the relay LTE undergoes cell handover or reselection, the relay LTE may perform S301 and S302 to generate and transmit the replacement indication information.

In some embodiments, in S301, the replacement indication information includes at least one of the following: handover indication information which indicates that the relay UE performs cell reselection or handover; an identity of the target base station after the replacement or an identity of the target cell in the target base station after the replacement, wherein the target base station after the replacement is the target base station corresponding to the relay UE after the replacement; indication information indicating that signal quality of the target cell in the target base station before the replacement is below a preset threshold; indication information of discovering a new target cell, wherein the new target cell may belong to the target base station after the replacement; or indication information indicating that signal quality of the new target cell is higher than the preset threshold.

Further, in S302, the relay LTE may transmit the replacement indication information to the remote UE through a PC5 interface.

From above, during the remote LTE performs handover preparation or handover, the relay LTE actively generates the replacement indication information based on its own movement or handover situation and transmits the replacement indication information to the remote UE, thereby avoiding a handover failure caused by the remote UE being unaware of the movement of the relay UE. Further, the remote UE, based on the replacement indication information, promptly notifies the source base station to stop the handover with the original target base station that has become no longer suitable due to the movement of the relay LTE, making it possible to avoid a handover failure.

FIG 4 is a structural diagram of a handover apparatus according to an embodiment. Those skilled in the art could understand that the handover apparatus 4 may be applied to perform the method as shown in FIG 3.

Referring to FIG 4, the handover apparatus 4 may include: a generating circuitry 41 configured to generate replacement indication information based on cell reselection or handover being performed, wherein the replacement indication information indicates replacement of a target base station or a target cell, or indicates termination of handover for a remote LTE; and a transmitting circuitry 42 configured to transmit the replacement indication information.

The action of transmitting the replacement indication information is performed during the remote UE in the handover or handover preparation, and the remote LTE receives the replacement indication information.

Details of working principles and working modes of the handover apparatus 4 may be referred to relevant description of FIG 3, and are not repeated here.

In some embodiments, the handover apparatus 4 may correspond to a chip with a handover function in a LTE, or to a chip with a data processing function, such as an SOC or a baseband chip, or to a chip module including a chip with a handover function in the UE, or to a chip module including a chip with a data processing function, or to the UE.

In some embodiments, each module/unit of each apparatus and product described in the above embodiments may be a software module/unit or a hardware module/unit, or may be a software module/unit in part, and a hardware module/unit in part.

For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

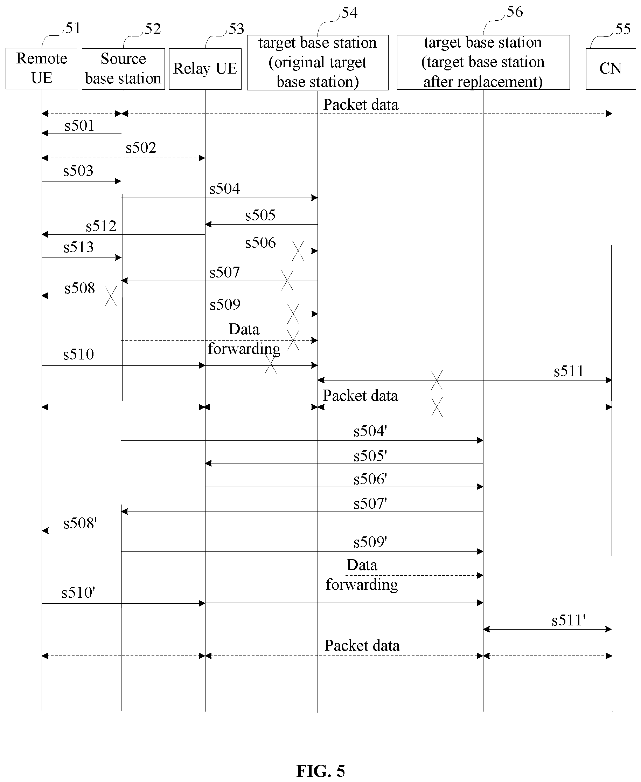

In an application scenario, referring to FIG 5, a handover procedure based on the above solution 1 may include following steps.

A remote LTE51 communicates with a Core network (CN) 55 through a source base station 52 and obtains packet data.

First, the source base station 52 performs s501 to transmit an RRC Measurement Control message to a remote UE 51.

Afterward, the remote UE 51 performs s502 to perform a relay discovery operation and set up a PC5 connection with the discovered relay UE 53.

Afterward, the remote LTE 51 performs s503 to transmit an RRC measurement report to the source base station 52.

In response to receiving the RRC measurement report, the source base station 52 performs s504 to transmit a base station (interface between base stations, X2) handover (HO) request to a target base station 54.

In this case, the relay UE53 may be in a non-connected state, thus, the target base station 54 may page the relay UE 53. Specifically, the target base station 54 may perform s505 to transmit handover information of the remote UE 51 to the relay UE 53.

Afterward, the relay UE 53 performs s506 to transmit an Acknowledgment (Ack).

In response to receiving the ACK, the target base station 54 performs s507 to transmit a handover request acknowledgment message (HO Req Ack) to the source base station 52.

Afterward, the source base station 52 performs s508 to transmit an RRC connection reconfiguration (RRCConnectionReconfig) message to the remote UE 51, such as including mobility control information.

The source base station 52 further performs s509 to transmit a sequence number (SN) state transfer message to the target base station 54.

While data forwarding is in progress, the remote LTE 51 performs s510 to transmit an RRC connection reconfiguration completion message to the target base station 54 through the relay UE 53.

In response to receiving the RRC connection reconfiguration completion message, the target base station 54 and CN55 perform s511 for Path Switch.

Afterward, the target base station 54 performs s512 to instruct the source base station 52 to release context of the remote UE 51 (UE Context Release).

Based on the above steps, the handover procedure is completed, and the remote UE51 can be connected to the target base station 54 through the relay UE 53, and communicate with CN 55 through the target base station 54 to continue transmitting packet data.

If the relay UE 53 moves or performs cell reselection/handover during a period from starting the handover procedure in s502 to completing the handover procedure in S511, the relay UE 53 may perform s512 to generate and transmit replacement indication information to the remote UE 51.

The replacement indication information is used to instruct the relay UE 53 to hand over from the original target base station 54 to the target base station 56 after the replacement. In response to receiving the replacement indication information, the remote UE 51 performs s513 to notify the source base station 52 to stop the handover procedure with the original target base station 54 and start the handover procedure with the updated target base station 56 after the replacement.

For example, in the scenario as shown in FIG 5, s512 may be performed after s505 or before s505, where the remote UE 51 needs to notify the relay UE 53 that the handover procedure is being performed. After receiving the handover termination information and a handover request, the source base station 52 may re-perform s504 to s511 (identified by s504' to operation s511' in FIG 5) with the target base station 56 after the replacement, to complete the handover procedure with the target base station 56 after the replacement. Accordingly, the remote UE 51 may be connected to the target base station 56 through the relay LTE 53, and perform data communication with CN 55 through the target base station 56 after the replacement to continue transmitting packet data.

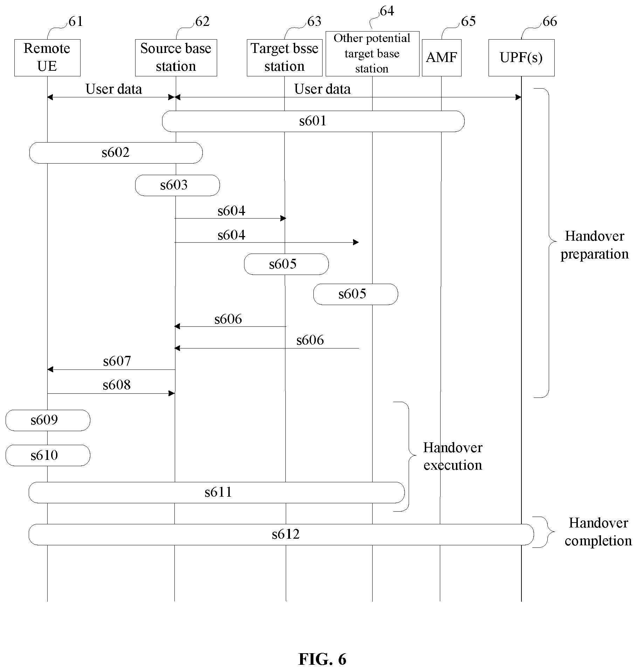

In another application scenario, referring to FIG 6, a handover procedure based on the above solution 2 may include following steps.

A remote LTE 61 interacts user data with User Plane Function (UPF) 66 through a source base station 62.

First, the source base station 62 performs s601 to interact with Access and Mobility Management Function (AMF) 65 and obtain mobility control information provided by the AMF 65.

Afterward, the remote UE 61 performs s602 to interact with the source base station 62 for measurement control and reporting.

Afterward, the source base station 62 performs s603 to determine to perform a conditional handover.

Afterward, the source base station 62 performs s604 to transmit a handover request to each of available base stations including a target base station 63 and other potential target base stations 64.

Afterward, the target base station 63 and the other potential target base stations 64 receiving the handover request may perform s605 to perform admission control.

Afterward, the target base station 63 and the other potential target base stations 64 may perform s606 to feedback a handover request acknowledgement message to the source base station 62.

Afterward, the source base station 62 performs s607 to initiate RRC reconfiguration to the remote UE 61. The remote UE 61 performs s608 to feedback an RRC reconfiguration completion message to the source base station 62.

Afterward, the remote LTE 61 performs s609 to evaluate CHO conditions, including evaluating whether cells corresponding to the target base station 63 and the other potential target base stations 64 meet the CHO conditions.

After selecting the target base station 63, the remote LTE 61 performs s610 to detach from the original cell and synchronize with a new cell.

Afterward, the remote UE 61 performs s611 of completing the CHO. Afterward, in S612, data forwarding and path switch are performed between the source base station 62 and the target base station 63. Based on the above steps, the handover procedure is completed.

The entire procedure may include handover preparation, handover execution, and handover completion, where the handover preparation may include s601 to s608, the handover execution may include s609 to s611, and the handover completion may include s612.

Before the handover is completed, if the relay UE (not shown) moves when the remote UE 61 performs S609 during the handover execution, and causes a replacement of the target base station 63, the relay UE may transmit replacement indication information to the remote UE 61. In s609, the remote UE 61 evaluates the target base station after the replacement (not shown) and other potential target base stations 64, and selects an updated target base station from thereof.

In an embodiment of the present disclosure, a storage medium having computer instructions stored therein is provided, wherein when the computer instructions are executed, the above method as shown in FIG 1 or 3 is performed. The storage medium may be a computer-readable storage medium, such as a nonvolatile memory or a non-transitory memory. The storage medium may include a ROM, a RAM, a magnetic disk or an optical disk.

In an embodiment of the present disclosure, a terminal including a memory and a processor is provided, wherein the memory has computer instructions stored therein, and when the processor executes the computer instructions, the above method as shown in FIG 1 or 3 is performed. The terminal may be an NR terminal which includes but is not limited to a mobile phone. For example, the terminal may include a remote UE to perform the method as shown in FIG 1. For another example, the terminal may be a relay LTE to perform the method as shown in FIG 3.

The technical solutions of the present disclosure can be applied to 5G communication systems, 4G and 3G communication systems, and various new communication systems in the future, such as 6G and 7G communication systems.

The technical solutions of the present disclosure also can be applied to different network architectures, including but not limited to a relay network architecture, a dual-link architecture, and a vehicle-to-everything architecture.

The Base Station (BS) in the embodiments of the present disclosure may also be referred to as a base station equipment, and is an apparatus deployed in a wireless access network to provide wireless communication functions. For example, an equipment that provides a base station function in a 2G network includes a Base Transceiver Station (BTS). An equipment that provides the base station function in a 3G network includes a Node B. An equipment that provides the base station function in a 4G network includes an evolved Node B (eNB). In a Wireless Local Area Network (WLAN), an equipment that provides the base station function is an Access Point (AP). An equipment that provides the base station function in 5G New Radio (NR) includes a gNB and an ng-eNB, where the gNB and the terminal use NR technology to communicate, and the ng-eNB and the terminal use Evolved Universal Terrestrial Radio Access (E-UTRA) technology to communicate. Both the gNB and the ng-eNB can be connected to a 5G core network. The base station also refers to an equipment that provides the base station function in a new communication system in the future.

The base station controller in the embodiments of the present disclosure is a device for managing base stations, such as a Base Station Controller (BSC) in a 2G network, a Radio Network Controller (RNC) in a 3G network, or a device that controls and manages a base station in a new communication system in the future.

The network in the embodiments of the present disclosure refers to a communication network that provides communication services for terminals, including a base station of a radio access network, a BSC of a radio access network, and a device on the core network.

A terminal in the embodiments of the present disclosure may refer to various forms of UE, access terminal, user unit, user station, Mobile Station (MS), remote station, remote terminal, mobile equipment, user terminal, terminal equipment, wireless communication equipment, user agent or user device. The terminal equipment may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure. In the embodiments of the present disclosure, a unidirectional communication link from an access network to a terminal is defined as a downlink, data transmitted on the downlink is downlink data, and a transmission direction of the downlink data is called a downlink direction. Besides, a unidirectional communication link from a terminal to an access network is defined as an uplink, data transmitted on the uplink is uplink data, and a transmission direction of the uplink data is called an uplink direction.

It could be understood that the term "and/or" in the present disclosure is merely an association relationship describing associated objects, indicating that there can be three types of relationships, for example, A and/or B can represent "A exists only, both A and B exist, B exists only. In addition, the character "/" in the present disclosure represents that the former and latter associated objects have an "or" relationship.

The "plurality" in the embodiments of the present disclosure refers to two or more.

The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

The "connection" in the embodiments of the present disclosure refers to various connection ways such as direct connection or indirect connection to realize communication between devices, which is not limited in the embodiments of the present disclosure.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A handover method, **characterized by** comprising:
receiving replacement indication information during handover or handover preparation,
wherein the replacement indication information indicates replacement of a target base station or a target cell corresponding to a relay LTE, or indicates termination of handover for a remote UE.

2. The method according to claim 1, **characterized by** further comprising:
generating and transmitting handover termination information based on the replacement indication information,
wherein the handover termination information indicates to terminate a handover operation between a source base station or a source cell and an original target base station or an original target cell, the original target base station is the target base station corresponding to the relay UE before the replacement, and the original target cell is a target cell in the original target base station.

3. The method according to claim 1, **characterized by** further comprising:
transmitting request information which indicates an updated target base station or an updated target cell based on the replacement indication information,
wherein the updated target base station is selected from a group consisting of the target base station after the replacement or target base stations corresponding to other relay UEs, and the updated target cell is selected from a group consisting of the target cell after the replacement or target cells corresponding to other relay UEs, wherein the target base station after the replacement is the target base station corresponding to the relay UE after the replacement, and the target cell after the replacement is a target cell in the target base station after the replacement.

4. The method according to claim 3, **characterized in that** said transmitting request information which indicates an updated target base station or an updated target cell based on the replacement indication information comprises:
evaluating cell information included in the replacement indication information to obtain an evaluation result, and selecting an optimal target base station or an optimal target cell as the updated target base station or the updated target cell based on the evaluation result, wherein the cell information comprises cell information of target cells in the target base station after the replacement and cell information of target cells in the target base stations corresponding to other relay UEs; and
transmitting the request information which indicates the updated target base station or the updated target cell.

5. The method according to any one of claims 1 to 4, **characterized in that** a communication connection with a source base station is a Uu connection, and a communication connection with the relay UE is a PC5 connection.

6. The method according to any one of claims 1 to 4, **characterized in that** a PC5 connection with the relay UE is retained unreleased until the handover is completed.

7. The method according to any one of claims 1 to 4, **characterized in that** the replacement indication information comprises at least one of the following:
handover indication information which indicates that the relay UE performs cell reselection or handover;
an identity of the target base station after the replacement or an identity of the target cell in the target base station after the replacement, wherein the target base station after the replacement is the target base station corresponding to the relay UE after the replacement;
indication information indicating that signal quality of the target cell in the target base station before the replacement is below a preset threshold;
indication information of discovering a new target cell; or
indication information indicating that signal quality of the new target cell is higher than the preset threshold.

8. A handover method, **characterized by** comprising:
generating replacement indication information based on cell reselection or handover being performed, wherein the replacement indication information indicates replacement of a target base station or a target cell, or indicates termination of handover for a remote UE; and
transmitting the replacement indication information.

9. A handover apparatus, **characterized by** comprising:
a receiving circuitry configured to receive replacement indication information during handover or handover preparation,
wherein the replacement indication information indicates replacement of a target base station or a target cell corresponding to a relay LTE, or indicates termination of handover for a remote UE.

10. A handover apparatus, **characterized by** comprising:
a generating circuitry configured to generate replacement indication information based on cell reselection or handover being performed, wherein the replacement indication information indicates replacement of a target base station or a target cell, or indicates termination of handover for a remote UE; and
a transmitting circuitry configured to transmit the replacement indication information.

11. A storage medium having computer instructions stored therein, **characterized in that** when the computer instructions are executed by a processor, the method of any one of claims 1 to 8 is performed.

12. A terminal, comprising a memory and a processor, **characterized in that** the memory has computer instructions stored therein, and when the processor executes the computer instructions, the method of any one of claims 1 to 8 is performed.
